# EUROPEAN PATENT APPLICATION

(11) **EP 1 065 584 A1**
(43) Date of publication of application: **03.01.2001**
(21) Application number: 99112398.5
(22) Date of filing: 29.06.1999
(51) Int. Cl.: G06F 3/033

(54) **Command handling in a data processing system**

(71) Applicant: TELEFONAKTIEBOLAGET LM ERICSSON, 126 25 Stockholm (SE)
(72) Inventor: Sjöberg, Mats R., 13664 Haninge (SE)
(74) Representative: Gray, Helen Mary

(57) **Abstract**

In a data processing system utilised for the management of technical equipment such as telecommunication hardware, industrial machines and equipment for controlling manufacturing processes, a graphical user interface is implemented to enable the user to execute commands without having a specialist knowledge of a command based language. To enable batch files containing several commands to be generated, consulted and modified through the graphical user interface, the batch file is arranged as a data structure, wherein each command is mapped to the user interface and retrievable for consultation or modification through the same.

## Description

### Field of invention

The invention relates generally to command handling systems in a data processing device. More particularly, the invention relates to a method and system for generating and modifying mass commands through a user interface utilising graphical or similar means of visual representation.

### Background art

A graphical user interface (GUI) is widely used to enable a user to generate commands for a computer system without knowledge of the command language utilised by the system. A graphical user interface has obvious advantages in the small computer and office PC market, particularly with respect to word-processing, bitmap editing, spreadsheet applications and the like. However, it also has important role in custom computer systems utilised for controlling technical equipment. Examples of such equipment include telecommunication hardware, industrial machines and equipment for controlling manufacturing processes. The normal operation of such equipment may require a varying amount of input from a user to control the equipment. Such tasks are preferably handled using a graphical user interface because the user can then operate the system relatively easily and intuitively without knowledge of the command language by selecting various options provided by the graphical user interface on a display screen.

Such an arrangement is very effective for issuing commands that are to be executed immediately, however, when a large number of operations are required, for example in order to configure a system or execute the same operation repeatedly, it is common practice to assemble the required commands in a batch file and execute the file at the appropriate time.

Conventionally, batch files are simple text files containing lines of code written in command language. The commands are then executed in turn as the text is read from the file. In management systems which include a graphical user interface batch files may be created in two ways. A first possibility is to build the graphical user interface on top of a command-based interface that supports the command language. Any commands generated with the graphical user interface can be translated into the command language. The command-based interface may then be utilised for creating and modifying batch files. While such a design means that a single code can be implemented for executing commands and validating input data, whether input via the graphical user interface or into a batch file, it carries with it the disadvantage that the user must be familiar with the syntax and parameters of the command language despite the provision of the graphical user interface.

A second approach is to fully exploit the graphical user interface such that commands cannot be executed using a command shell. However, in order to implement a batch file feature, a special batch file command language must be designed, sometimes with limited editing capabilities. With this solution also the user is required to learn to use a separate command-based interface. It is also very likely that separate code would have to be provided for validating command parameters entered via the graphical user interface and entered in the batch file command language.

There is thus a need for a system that enables the generation and modification of both single and batch commands easily and relatively intuitively without the duplication of a command interface.

### SUMMARY OF INVENTION

The invention resides according to one aspect in a method for handling commands in a data processing system. The method includes the provision of a user interface for enabling the generation of commands, and utilising the user interface to generating a command file that contains at least one command. The command file is arranged as a data structure, wherein each command is mapped to the user interface and retrievable for consultation or modification through the same.
The invention further resides in a data processing system for managing commands and in a computer programme product.

By mapping individual commands in a batch file to a user interface, which is preferably a graphical user interface to facilitate intuitive use, the command can be retrieved through the user interface and modified or deleted without specialist knowledge of the language of the batch file. The user thus has no need to learn a second command language as all operations may be accomplished via the graphical user interface. This solution is also very economical in terms of code, since the code used for implementing the graphical user interface for generating commands can be used for generating, consulting and editing batch files. Furthermore, since the batch file itself will not be viewed by the user, this file can be written in a low level language, i.e. a language having a form and structure that is convenient only for representation within the data processing system but that has no resemblance to a natural language or mathematical formula.

### BRIEF DESCRIPTION OF THE DRAWINGS

Further objects and advantages of the present invention will become apparent from the following description of the preferred embodiments that are given by way of example with reference to the accompanying drawings. In the figures:
Fig. 1 shows the general configuration of a data processing device;
Fig. 2 shows a window implemented in a graphical user interface including a command page;
Fig. 3 schematically illustrates the organisation of a batch file; and
Fig. 4 shows a batch editor window implemented in the graphical user interface.

### DETAILED DESCRIPTION OF THE DRAWINGS

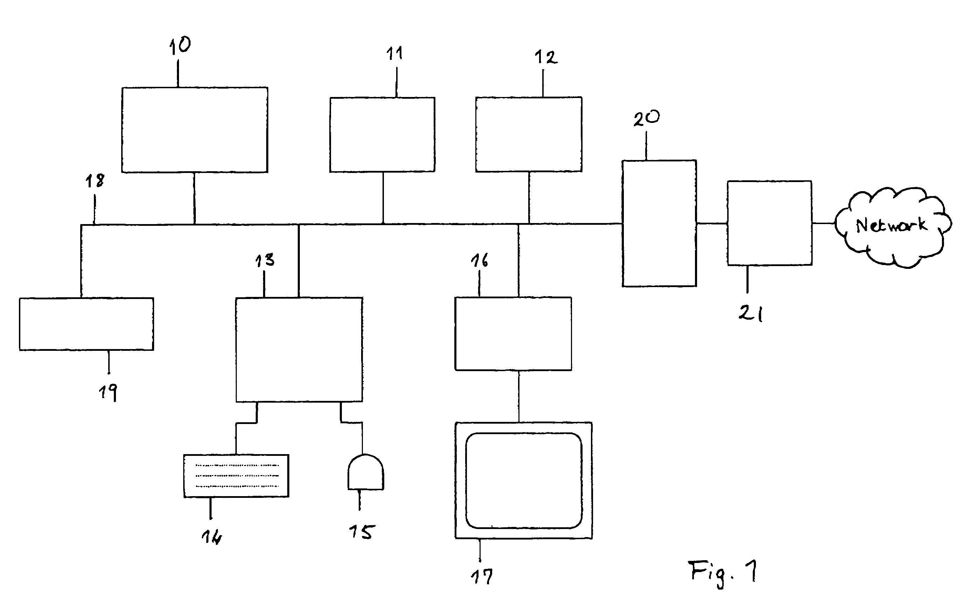

Fig. 1 schematically illustrates the key elements of a data processing system. Central to the system is a processor 10, which in many workstations and personal computers (PC) will be a single-chip microprocessor, possibly with an additional co-processor for arithmetic (floating point) operations. The processor 10 fetches, decodes and executes computer-readable instructions, which may be in the form of software stored in the data processing system, on a peripheral device or network, or the like. Information is transferred to and from the various resources of the data processing system via a main data or system bus 18 under control of a bus controller 19. Various memory devices 11 are connected to the data bus 18, and include both non-volatile memory, such as ROM and EPROM, for storing instructions for operating the system, and volatile memory such as RAM for temporary storage. Access to memory 11 may be controlled by a memory controller 12 which is similarly coupled to the data bus 18.

The data processing system further includes a keyboard 14 and cursor-moving device, which in the illustrated embodiment is a mouse 15. Other input devices include, but are not limited to, a stylus, a light pen and a touch sensitive screen. A keyboard/mouse controller 13 coupled to the data bus 18 interfaces with the keyboard 14 and mouse 15. A display 17 is provided for visually displaying output generated by the system. It is controlled by a display controller 16. An input/output device 20 is provided for interfacing with external technical equipment. In the present embodiment this equipment is a network node 21 of a telecommunications network. However, it will be understood that various diverse forms of equipment could be controlled by the data processing system, including industrial machines or equipment for controlling manufacturing processes. The data processing device may include other resources such as a disk drive, CD-ROM drive, modem and printer. The system may also include a network adapter for connecting the data processing system with a local area network.

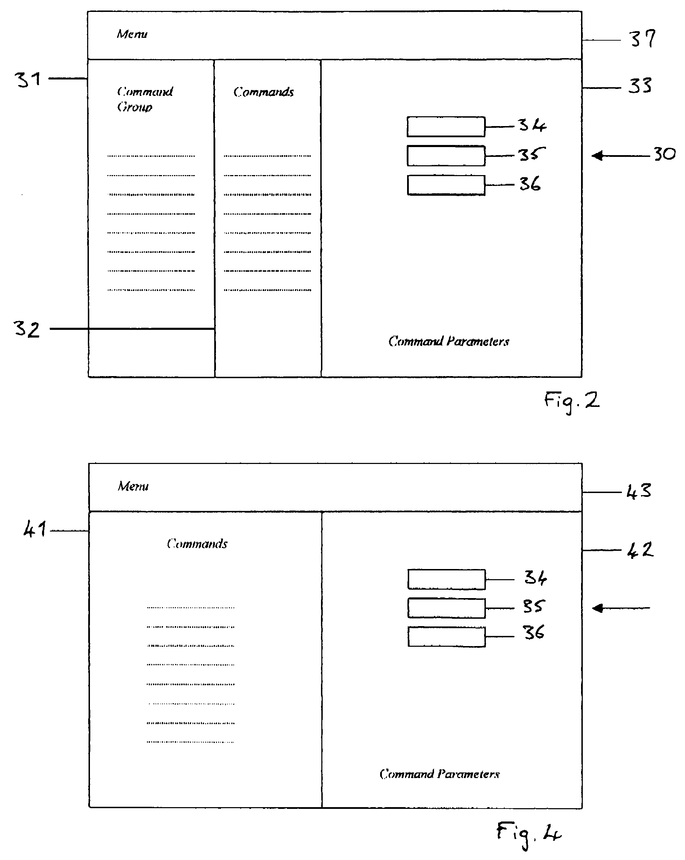

With reference now to Fig. 2, there is shown a first command generating window 30 of a management interface according to the method and system of the present invention. The management interface is implemented in software in graphical form with the information displayed for selection by the user.

A command consists of at least one operation possibly with one or more variable parameters. The command generating window 30 is divided into three sections 31, 32, 33. The first section 31 includes a list of the classes of operation or command groups that can be controlled or defined by the system. When the user selects one of these groups, using either the mouse or keyboard, the second section 32 displays the list of relevant operations or commands. Upon selecting one of the operations, a command page 33 is displayed in the third section of the window. The command page 33 includes fields 34, 35, 36, for parameters associated with the selected operation. These fields may be preset, modifiable or empty, whereupon the user is invited to enter appropriate values or other characters or symbols. In the present example, three fields must be defined for the illustrated operation. This may be done by inserting a value or other string of characters in the field using the keyboard. Alternatively, a menu may be provided associated with each field whereby the user can be prompted by a list of allowable entries. A certain number of conditions may be associated with each field to ensure that the values inserted are valid for the system in general, and specifically for the hardware that is being controlled.

Each command page 33 is defined as an object containing the features that are specific to the operation in question, such as the number and type of parameters 34, 35, 36 associated with the operation, the allowable input values and any other limitations relevant to the operation. The fields 34, 35, 36 are furthermore each identified by a specific id reference. It will be understood that while three fields 34, 35, 36 are illustrated in the command page 33, the number of fields will depend on the operation; some operations may have more variables, others less, and some no variables at all. The command pages 33 may be stored as objects in a database or as functions, i.e. running programs, in the system. Either way, they are retrievable by the management interface 30 when the relevant operation or command is selected in the second section 32 of the window.

In the illustrated embodiment, every command defined though the command page 33 is executed upon completion. However, the user has the option to record the various actions carried out in the management interface for a desired length of time. This is accomplished by selecting a record option on a menu bar 37 located at the top of the screen. Once recording has commenced, each action performed via the graphical user interface is saved to a file, until the user elects to stop recording. An alternative method of generating a batch file is to provide the user with the option, either prior to writing a command or after completing the fields of a command page 33, to execute the command immediately or save it in a file for execution later. In this way several non-consecutively written commands could be added to the same batch file.

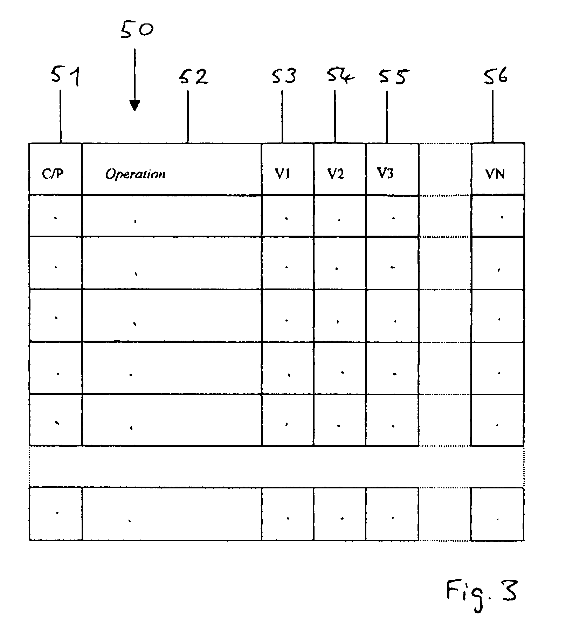

The batch file is not a text file containing lines of commands but instead is organised as a data structure. Fig. 3 illustrates the organisation of the data structure within a batch file according to the present invention. The batch file 50 is divided into a number of areas 51 to 56 each containing information concerning a specific element of a command. Specifically, the data structure contains an area 51 (C/P) for identifying the command page object 33 used to generate each command and an area 52 for information about which operations to execute 52. A number of further areas 53 to 56 are provided for the command parameters and the values or other variables that were entered by the user in the designated fields 34, 35, 36 of the command page 33. These parameters and variables are denoted by V1 to VN in the Fig. 3. It will be understood that the number of variables associated with each command or operation depends on the operation. Some may have no variables at all. Each entry V1 to VN contains the value or characters entered by the user and also the id reference of the field 34, 35, 36 of the command page object 33 in which it was entered. Thus with the information in the batch file 50, the correct command page object 33 can be retrieved, the initial values entered by the user are also retrieved from the data structure and mapped to the correct input fields 34, 35, 36, and the whole then displayed for consultation or modification.

It will be understood that while Fig. 3 illustrates the organisation of a batch file 50, this representation provides no indication as to the actual structure of code contained in a batch file. Since the user will have no need to view the batch file in a text editor as all access is via the graphical management interface, the language used may be very low level and consist only of symbols that bear no relation to a natural language or mathematical formula. This has the advantage that the language may be designed uniquely with the machine in mind and thus be very concise.

With reference now to Fig. 4 there is shown a batch command-editing window 40 of the graphical user interface. This editing window 40 is opened by selecting the appropriate operation on the menu bar 37 of the management interface. The batch editor window 40 is divided into two segments. A first segment 41 displays the list of commands or operations included in a selected batch file. When a file is selected, via the menu bar 43 the various elements 51-56 of the data structure 50 are retrieved and the operations are displayed in this list 41. The user has the option to modify this list in terms of the order and number of operations with the standard editing commands CUT, COPY, PASTE via the menu bar 43. An option to edit a selected operation in the list is also provided in the menu bar. When the user selects this option, the user interface fetches the command page 33 identified by C/P 51 in the batch file, inserts the variables V1-VN in the fields identified by the id references and displays the whole in the second segment of the batch editor window 42. The variables V1-VN can then be altered by the user as desired, within the limits of any programmed restrictions. Any alterations will then be recorded in the batch file as before.

It will be understood that by storing the command pages 33 as objects these may be retrieved in the same way both by the batch command edit window 40 and by the command generation window 30 upon selection of the associated operation. This simplifies the software required to implement these two elements.

The batch editor 40 can also be used to create new batch files by permitting the user to save an existing batch file under a new name and alter the commands as desired.

The execution of a command batch file can be effected by specifying the execution of a batch file in the management interface. The batch editor may also be provided with an option to execute a batch file.

As mentioned previously, the relevance of the present method and system is not limited to control systems for technical equipment but also has significance for general computing applications where keystrokes and commands can be stored. Applications of this kind include word processors, bitmap editors, spreadsheet applications and the like. For example, when a user desires to collect a number of operations together and call these up at will, this is generally achieved by means of a macro which the user records through a graphical user interface as key strokes or selections made with a cursor moving device such as a mouse. Editing of macros is conventionally very limited. The ability to edit a macro using the interface of the original application according to the present invention would greatly increase its utility.

## Claims

1. A command handling method in a data processing system including the steps of:
providing a user interface (30) for enabling the generation of commands, each command comprising at least one element (52-56),
characterised by
using said user interface, inserting at least one generated command in a command file (50), and organising said command file as a data structure, wherein each command in the file is mapped to the user interface (30, 33, 40) and retrievable for consultation or modification through the interface.

2. A method as claimed in claim 1, wherein and each element of a command is mapped to the user interface (30, 33, 40) and wherein said step of consulting or modifying a command in a command file (50) includes consulting or modifying one or more elements (52-56) of said command.

3. A method as claimed in claim 2, wherein the elements of a command include variable parameters (53-56).

4. A method as claimed in any previous claim, including: providing a command page (33) in said user interface (30) for generating a command, and associating a command page (33, 51) with each generated command (52-56) in said command file (50).

5. A method as claimed in claim 4 including: retrieving an associated command page (33) when consulting or modifying a command from a command file (50) with said user interface (40).

6. A method as claimed in claims 4 or 5, wherein said command page 33 comprises a number of identified fields (34-36) for elements of a command, and said step of associating a command page with each generated command includes associating elements (52-56) of said command with the identified fields (34-36) of the command page (33).

7. A method as claimed in any previous claim, wherein said user interface (30, 40) is a graphical user interface.

8. A data processing system for handling commands, including display means (17, 16) and user input means (13-15), said system further including: user interface means (30, 40) for enabling the generation of commands in conjunction with said display means and user input means, characterised by means for generating a command file (50) adapted to contain at least one command in the form of a data structure, wherein each command is mapped to the user interface (30, 40).

9. A system as claimed in claim 8, further including means (40) in said user interface for retrieving the commands of said file (50) for consultation or modification.

10. A system as claimed in claim 9, wherein each command comprises more than one element (52-56) and said retrieving means permit the consultation or modification of one or more elements of a command.

11. A system as claimed in any one of claims 8 to 10, further including means in said user interface (30) for displaying a command page (33) for enabling the execution of a command.

12. A system as claimed in claim 11, further including means for storing said command page (33) as an object for retrieval.

13. A system as claimed in claim 12, wherein each command page object (33) includes identified fields (34-36) for entered information (V1-VN).

14. A system as claimed in claim 13, wherein in said command file (50) entered information (V1-VN) associated with a command is mapped to said identified fields (34-36) of the command page object (33).

15. A network node controller, characterised by including a data processing system as claimed in any one of claims 9 to 15 for handling commands.

16. A computer programme product including:
computer-readable code for providing a graphical user interface (30, 40) for enabling the generation of commands,
computer-readable code for enabling the generation of a command file (50) including at least one command, wherein said command file is organised as a data structure in which each command is mapped to the user interface and retrievable for consultation or modification through the same.

17. A computer programme product as claimed in claim 16, wherein said computer readable code is stored on a computer readable storage medium.

18. A method for creating a batch file for commands in a data processing system, wherein the data processing system includes a graphical user interface (30, 33, 40), characterised by organising said batch file as a data structure (50) wherein each command is mapped to the graphical user interface (40, 33).

19. A method as claimed in claim 19 wherein the commands comprise at least one operation (52) and at least one variable (V1-VN) and the graphical user interface (33) comprises fields associated with each operation, the method including the step of mapping each variable to a field in the graphical user interface (33).
